# EUROPEAN PATENT APPLICATION

(11) **EP 4 621 883 A1**
(43) Date of publication of application: **24.09.2025**
(21) Application number: 23912444.9
(22) Date of filing: 07.09.2023
(51) Int. Cl.: H01M 4/62, H01M 4/134, H01M 10/052, H01M 4/02

(54) **COMPOSITION FOR PROTECTIVE LAYER FOR LITHIUM METAL ANODE, LITHIUM METAL ANODE, AND LITHIUM METAL BATTERY**

(30) Priority: 30.12.2022 KR 20220190233
(71) Applicant: SK On Co., Ltd., Seoul 03161 (KR)
(72) Inventor: SONG, Ju-Hye, Daejeon 34124 (KR); YOON, Na-Eun, Daejeon 34124 (KR)
(74) Representative: Prüfer & Partner mbB Patentanwälte · Rechtsanwälte
(86) International application number: PCT/KR2023/013389
(87) International publication number: WO 2024/143760

(57) **Abstract**

A composition for a protective layer for a lithium metal anode, according to an embodiment, comprises: an inorganic nitrate comprising a lithiophilic metal; and an organic polymer including fluorine (F), wherein the inorganic nitrate content of the composition for a protective layer for a lithium metal anode is 4 to 17 wt%, and the organic polymer content of the composition for a protective layer for a lithium metal anode is 4 to 17 wt%. According to the composition for a protective layer for a lithium metal anode, it is possible to (1) induce an even electrodeposition behavior and distribution of lithium ions and (2) form a protective layer for a lithium metal anode, having both excellent ion conductivity and mechanical strength, and a lithium metal anode comprising the protective layer can effectively inhibit the growth of lithium dendrites in a charging/discharging process.

## Description

### Technical Field

The present disclosure relates to a composition for a protective layer for a lithium metal anode, a lithium metal anode, and a lithium metal battery.

### Background Art

Interest in electric vehicles (EV) that may replace fossil fuel-based vehicles, one of the main causes of air pollution, has continuously increased, and the development of lithium secondary batteries, which are mainly used as the power source of electric vehicles (EV) due to high charging voltage and output stability thereof, is actively underway recently.

Meanwhile, a lithium metal, which has a relatively high capacity (3860 mAh/g) and a low redox potential (-3.04 V vs. SHE), has recently attracted attention as a promising anode material, and research into lithium metal batteries including such lithium metal anodes (LMA) has been also conducted.

However, when lithium metal is applied as an anode, there is a problem that the high reactivity of lithium metal causes continuous side reactions with the electrolyte, which may result in an unstable film and may exhibit poor lifespan characteristics. Specifically, lithium dendrites, which occur during battery charging/discharging, not only significantly reduce the lifespan of the battery, but also may cause rapid internal short circuits, resulting in fire and explosions, and accordingly, technology is required to effectively control such problems.

### Summary of Invention

### Technical Problem

An aspect of the present disclosure is to provide a composition for a protective layer for a lithium metal anode that may induce uniform lithium deposition to suppress the growth of lithium dendrites and may effectively improve the electrochemical performance, efficiency, safety, and the like, of a battery.

Another aspect of the present disclosure is to provide a lithium metal anode and a lithium metal battery having excellent electrochemical performance, lifespan characteristics, safety, and the like.

### Solution to Problem

A composition for a protective layer for a lithium metal anode according to an embodiment may include: an inorganic nitrate including a lithio-philic metal; and an organic polymer including fluorine (F), wherein an inorganic nitrate content of the composition for a protective layer for a lithium metal anode may be 4 to 17 wt%, and an organic polymer content of the composition for a protective layer for a lithium metal anode may be 4 to 17 wt%.

A weight ratio of an inorganic nitrate and an organic polymer in the composition for a protective layer for a lithium metal anode may be 1:9 to 9:1.

A weight ratio of an inorganic nitrate and an organic polymer in the composition for a protective layer for a lithium metal anode may be 2:8 to 4:6.

The composition for a protective layer for a lithium metal anode may further include a lithium salt including fluorine (F).

A content of the lithium salt in the composition for a protective layer for a lithium metal anode may be 10 wt% or less.

A content of the lithium salt in the composition for a protective layer for a lithium metal anode may be 1 wt% or less.

The lithium salt may be represented by the following chemical formula 1. 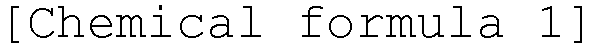 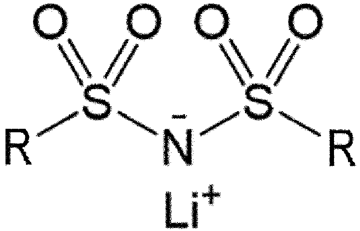 In chemical formula 1, R may represent each independently fluorine (F); an alkyl group having 1 to 20 carbon atoms substituted with at least one fluorine (F); or an aryl group having 6 to 30 carbon atoms substituted with at least one fluorine (F).

The lithio-philic metal may be Au, Ag, Pt, Al, Mg, Zn, Ni, Te, Bi, Pb, Ga, Cd, Hg, Pd, Sc, Y, Ca, Sr, Ba, Ni, Sn, Cu, Ge, or combinations thereof.

The lithio-philic metal may be Ag.

The organic polymer may be an aliphatic organic polymer including fluorine (F).

The organic polymer may include at least one selected from polyvinylidene difluoride (PVDF) and polyvinylidene difluoride-hexafluoropropylene copolymer (PVDF-co-HFP).

In the composition for a protective layer for a lithium metal anode according to an embodiment, the inorganic nitrate may include Ag, the organic polymer may be an aliphatic organic polymer including fluorine, the lithium salt may be represented by the following chemical formula 1, and a weight ratio of the inorganic nitrate and the organic polymer in the composition for a protective layer for a lithium metal anode may be 2:8 to 4:6.

A viscosity of the composition for a protective layer for a lithium metal anode may be 100 to 400 cP.

A lithium metal anode according to an embodiment includes: a lithium metal layer; and a protective layer formed on at least one surface of the lithium metal layer, where the protective layer is manufactured using a composition for a protective layer for a lithium metal anode according to one of the above-described embodiments.

The lithium metal anode may further include: an intermediate layer between the lithium metal layer and the protective layer.

A lithium metal battery including a lithium metal anode according to one of the above-described embodiments. Advantageous Effects of Invention

According to an embodiment of the present disclosure, a protective layer for a lithium metal anode, which includes (1) an inorganic nitrate including a lithio-philic metal and (2) an organic polymer including fluorine (F) to induce uniform electrodeposition behavior and distribution of lithium ions and has excellent ion conductivity and mechanical strength, may be formed.

According to another embodiment, a one-pot reaction through a solution process using a composition may be performed when forming a protective layer on the surface of a lithium metal layer, and a lithium metal anode may be manufactured with high productivity by reducing process time and costs.

According to another embodiment, a lithium metal anode including a protective layer capable of effectively suppressing the growth of lithium dendrites may be provided by inducing uniform distribution and reversible electrodeposition/stripping behavior of lithium ions during an electrochemical reaction, and the lifespan characteristics, electrochemical performance, or the like, of a lithium metal battery including the same may be improved.

### Brief Description of Drawings

FIG. 1A is a conceptual view illustrating a cross-section of a lithium metal anode according to an embodiment.
FIG. 1B is a conceptual view illustrating a cross-section of a lithium metal anode according to another embodiment.
FIG. 2 is a view illustrating a lithium metal anode having a separate protective layer formed on a lithium metal layer (Inventive Examples 1 and 4) and a lithium metal anode having no separate protective layer formed therein (Comparative Example 1), respectively.
FIG. 3 is a view illustrating the results of an overvoltage evaluation according to time (number of cycles) for lithium metal batteries including lithium metal anodes according to Inventive Example and Comparative Example.
FIG. 4 is a view illustrating the results of an evaluation of a capacity retention rate according to the number of cycles for lithium secondary batteries including lithium metal anodes according to the Inventive Example and the Comparative Example. Best Mode for Invention

Hereinafter, preferred embodiments will be described with reference to various examples. However, the embodiments are not limited to embodiments described below, and may be modified in various other forms.

Hereinafter, unless otherwise specifically defined, when a part such as a layer, a film, a thin film, a region, or a plate is disposed "on" or "over" another part, this may include not only the case in which the part is "directly over" another part, but also the case in which there is another part therebetween.

As described above, research is conducted on applying lithium metal having relatively high capacity and low redox potential characteristics as an anode, but it is difficult to secure the lifespan characteristics and stability of the battery due to problems such as formation of lithium dendrite.

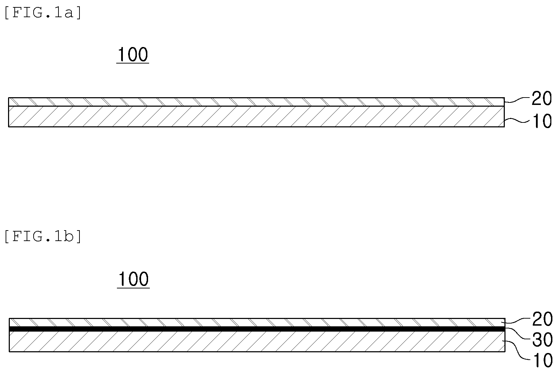

A composition for a protective layer for a lithium metal anode according to an embodiment may provide a lithium metal anode that may substantially solve the problems described above by forming a protective layer on a surface of a lithium metal layer that may induce uniform electrodeposition behavior and distribution of lithium ions, and can improve the ion conductivity, lifespan characteristics, and the like, of a lithium metal battery including such an anode. Specific details are disclosed below with reference to FIGS. 1A to 4.

FIG. 1A is a view conceptually illustrating a cross-section of a lithium metal anode according to an embodiment.

FIG. 1B is a view conceptually illustrating a cross-section of a lithium metal anode according to another embodiment.

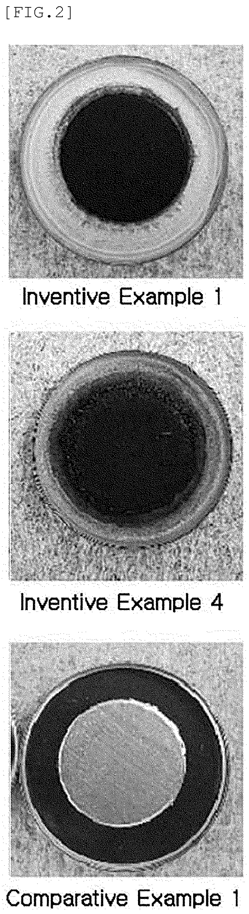

FIG. 2 is a view illustrating a lithium metal anode having a separate protective layer formed on a lithium metal layer (Inventive Examples 1 and 4) and a lithium metal anode having no separate protective layer formed therein (Comparative Example 1), respectively.

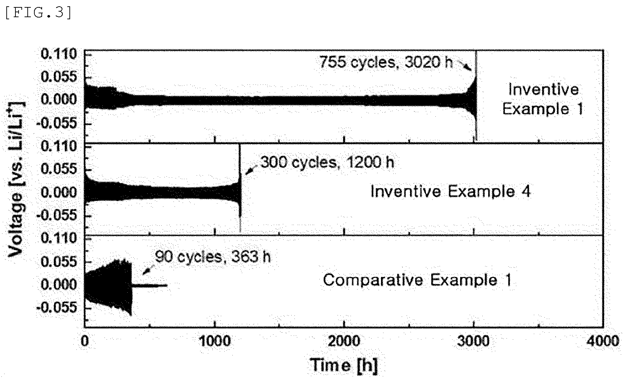

FIG. 3 is a view illustrating the results of an overvoltage evaluation according to time (number of cycles) for lithium metal batteries including lithium metal anodes according to Comparative Example and Comparative Example.

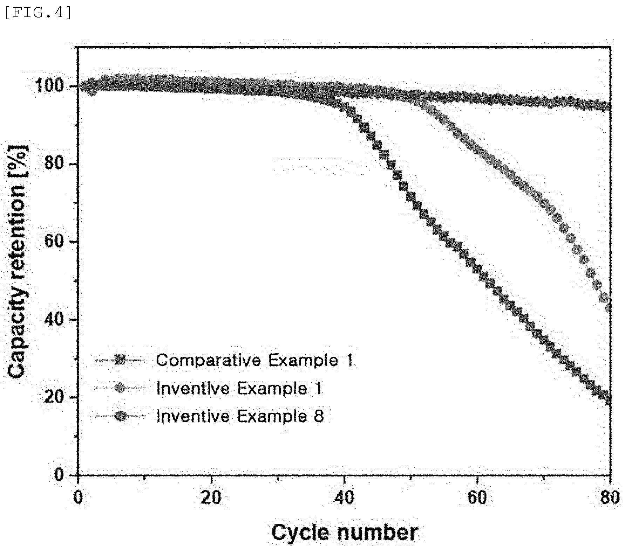

FIG. 4 is a view illustrating the results of an evaluation of a capacity retention rate according to the number of cycles for lithium secondary batteries including lithium metal anodes according to Comparative Example and Comparative Example.

### Composition for a Protective layer for an Anode

A composition for a protective layer for a lithium metal anode according to an embodiment includes: an inorganic nitrate including a lithio-philic metal; and an organic polymer including fluorine (F), and the inorganic nitrate content of the composition for a protective layer for a lithium metal anode is 4 to 17 wt%, and the organic polymer content of the composition for a protective layer for a lithium metal anode is 4 to 17 wt%.

The composition for a protective layer for a lithium metal anode is an organic/inorganic composite composition including both inorganic and organic materials, and includes (1) an inorganic nitrate including a lithio-philic metal and (2) an organic polymer including fluorine (F).

The inorganic nitrate refers to a nitrate (NO₃⁻), a compound made by dissolving an inorganic material such as a metal in nitric acid, and the inorganic nitrate includes a lithio-philic metal. Here, lithio-philic denotes having an affinity for lithium, and when lithium exists together with a material having a low affinity for lithium, the lithium metal is selectively subject to electrodeposition first. On the other hand, a lithio-philic material having a high affinity for lithium lowers an initial nucleation resistance of a lithium electrodeposition reaction, thereby inducing uniform electrodeposition of the lithium metal, and thus, it may be possible to suppress the growth of lithium dendrites.

The lithio-philic metal is a metal having lithio-philic properties, such as silver (Ag), gold (Au), zinc (Zn), and magnesium (Mg), which electrochemically reacts with lithium and may act as a seed to lower a lithium nucleation barrier, and may form an alloy with lithium ions to induce uniform electrodeposition behavior of lithium ions. The lithio-philic metal may be Au, Ag, Pt, Al, Mg, Zn, Ni, Te, Bi, Pb, Ga, Cd, Hg, Pd, Sc, Y, Ca, Sr, Ba, Sn, Cu, Ge, or combinations thereof.

Accordingly, when a protective layer for a lithium metal anode is formed with an inorganic nitrate including a lithio-philic metal having the above-described properties, it may be possible to effectively prevent problems such as a decrease in irreversible capacity and internal short circuits in the battery by suppressing the growth of lithium dendrites during the battery charge/discharge process.

The lithio-philic metal may be Ag. Specifically, the inorganic nitrate may include silver nitrate (AgNO₃), which is a nitrate including silver (Ag) as the lithio-philic metal. When the lithio-philic metal includes silver (Ag), an Li-Ag alloy formed by reacting with lithium ions (Li⁺) may have ion conductivity and may exhibit high stability on a surface of the lithium anode. Additionally, the uniform electrodeposition behavior of lithium ions may be induced significantly excellently during the electrochemical reaction occurring during the battery charge/discharge process due to the low lithium nucleation energy.

When the composition for a protective layer for a lithium metal anode includes the lithio-philic metal in the form of an inorganic nitrate, during the battery charge/discharge process, a film (N-Rich SEI) including a large amount of nitrogen (N) is formed inside or on a surface of the protective layer for a lithium metal anode manufactured with the composition, thereby further improving lithium ion conductivity and mechanical strength.

The organic polymer refers to a polymer including a large amount of fluorine (F) (F-Rich), and when the composition for a protective layer for a lithium metal anode includes such an organic polymer, a film (F-Rich SEI) including a large amount of fluorine (F) may be inside or on the surface of the protective layer for a lithium metal anode manufactured with the composition during the battery charge/discharge process. The F-Rich SEI may induce a uniform distribution of lithium ions during an electrochemical reaction and may suppress the growth of lithium dendrites, thereby further improving the performance of the lithium battery.

The organic polymer may have a semi-crystalline structure including both a crystallized portion and a partially amorphous portion, and the organic polymer may include at least one selected from polyvinylidene difluoride (PVDF) or a polyvinylidene difluoride-hexafluoropropylene copolymer (PVDF-co-HFP). Specifically, the organic polymer may include a copolymer in which two or more monomers respectively including fluorine (F) are copolymerized, and more specifically, may be a copolymer including a crystallized structural unit and an amorphous structural unit. For example, the organic polymer may include a polyvinylidene difluoride-hexafluoropropylene copolymer (PVDF-co-HFP). Here, the copolymer may include an alternating polymer, a block copolymer, a random copolymer, a branched copolymer, a crosslinked copolymer, or all of these copolymers.

Although not intended to be bound by a specific theory, the PVDF-co-HFP is a copolymer having a semi-crystalline structure including both a crystallized portion (PVDF) and a partially amorphous portion (HFP), and thus, when manufacturing the protective layer for a lithium metal anode with a composition including the PVDF-co-HFP, the mechanical strength of the protective layer may be secured by the crystallized portion, and lithium ion conductivity may be further improved by the amorphous portion. Additionally, when the composition for the anode protective layer includes the PVDF-co-HFP together with an inorganic nitrate, the mechanical strength of a finally manufactured protective layer may be further improved as compared to when PVDF-co-HFP is included alone, and thus the growth of lithium dendrites may be further suppressed.

The content of the inorganic nitrate in the composition for a protective layer for a lithium metal anode may be 4 to 17 wt%, the content of the organic polymer in the composition for a protective layer for a lithium metal anode may be 4 to 17 wt%. Specifically, the content of the inorganic nitrate in the composition for a protective layer for a lithium metal anode may be 5 wt% or more, 7 wt% or more, or 9 wt% or more, and may be 15 wt% or less, 13 wt% or less, or 11 wt% or less. Additionally, the content of the organic polymer in the composition for a protective layer for a lithium metal anode may be 5 wt% or more, 7 wt% or more, or 9 wt% or more, and may be 15 wt% or less, 13 wt% or less, or 11 wt% or less.

When the content of inorganic nitrate in the composition is significantly high, since the viscosity of the composition is high, it may be practically difficult to form the protective layer on the lithium metal layer. Additionally, when the content of inorganic nitrate in the composition for a protective layer for a lithium metal anode is significantly low, it may be practically difficult to obtain effects such as inhibition of lithium dendrite growth due to addition of inorganic nitrate. Accordingly, when the content of inorganic nitrate in the composition for a protective layer for a lithium metal anode is adjusted within the above-described range, inorganic nitrate may be added within a range in which there is no problem in the process of forming the protective layer, so that effects such as improvement of battery lifespan characteristics due to the formation of the protective layer may be secured on an excellent level.

A weight ratio of the inorganic nitrate and the organic polymer in the composition for a protective layer for a lithium metal anode may be 1:9 to 9:1. Specifically, the weight ratio of the inorganic nitrate and the organic polymer in the composition for a protective layer for a lithium metal anode may be 2:8 to 4:6. When the weight ratio of the inorganic nitrate and the organic polymer in the composition for a protective layer for a lithium metal anode is within the above-described range, the inorganic material included in the inorganic nitrate is arranged more densely and closely in the organic polymer matrix, so that a large amount of seeds capable of uniformly performing electrodeposition on lithium may be uniformly distributed in the organic polymer matrix. Additionally, a film (N-Rich SEI) including a large amount of nitrogen (N) may be easily formed on the lithium metal layer 10, thereby further improving the battery performance.

The composition for a protective layer for a lithium metal anode may further include a lithium salt, and specifically, may further include a lithium salt including fluorine (F). The lithium salt is not particularly limited as long as this is an inorganic salt including lithium (Li) and fluorine (F), but the lithium salt may include at least one selected from lithium bis(fluorosulfonyl)imide (LiFSI), lithium bis(trifluoromethanesulfonyl)imide (LiTFSI), lithium fluoride (LiF), lithium hexafluorophosphate (LiPF₆), lithium tetrafluoroborate (LiBF₄), lithium trifluoromethanesulfonate (LiCF₃SO₃), or lithium hexafluoroarsenate (LiAsF₆).

When the composition further includes a lithium salt including fluorine (F), a film (F-Rich SEI) including a large amount of fluorine (F) inside or on the surface of the finally manufactured protective layer for a lithium metal anode may be formed more excellently.

When the composition for a protective layer for a lithium metal anode further includes a lithium salt, the content of the lithium salt in the composition may be 10 wt% or less. Specifically, the content of the lithium salt in the composition for a protective layer for a lithium metal anode may be 5 wt% or less, 1 wt% or less, or 0.01 wt% or more.

The lithium salt may be represented by the following chemical formula 1.

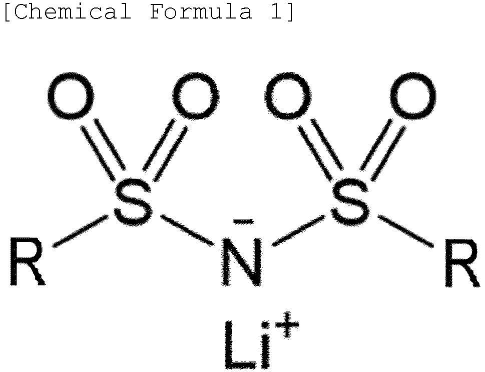

In the chemical formula 1, R represents each independently fluorine (F); an alkyl group having 1 to 20 carbon atoms substituted with at least one fluorine (F); or an aryl group having 6 to 30 carbon atoms substituted with at least one fluorine (F).

In the composition for the lithium metal anode protective layer according to an embodiment, the inorganic nitrate may include Ag, the organic polymer may be an aliphatic organic polymer including fluorine, the lithium salt may be represented by the chemical formula 1, and a weight ratio of the inorganic nitrate and the organic polymer in the composition for a protective layer for a lithium metal anode may be 2:8 to 4:6.

Meanwhile, the composition for a protective layer for a lithium metal anode according to an embodiment may not include a lithium salt including lithium (Li) and fluorine (F). That is, the composition for a protective layer for a lithium metal anode may include the inorganic nitrate and the organic polymer as described above, but the content of the lithium salt including fluorine (F) in the composition may be substantially 0 wt%.

The composition for a protective layer for a lithium metal anode may further include a commonly used organic solvent. For example, the organic solvent may include tetrahydrofuran (THF), but a type thereof is not particularly limited. When the composition for a protective layer for a lithium metal anode further includes an organic solvent, the content of the organic solvent in the composition may be, for example, 50 to 99 wt% or 60 to 90 wt%.

A viscosity of the composition for a protective layer for a lithium metal anode may be 100 to 400 cP. Specifically, the viscosity of the composition for a protective layer for a lithium metal anode may be 138.6 cP or more or 160 cP or more, and may be 300 cP or less, 250 cP or less, 220 cP or less, 200 cP or less, or 186.0 cP or less. When the viscosity of the composition is within the above-described range, a coating method or the like may be easily applied during a solution process, so that a protective layer may be excellently formed on the surface of the lithium metal layer, and the lithium metal anode may be manufactured with high productivity by shortening the process time and costs.

### Lithium Metal Anode

A lithium metal anode 100 according to an embodiment includes a lithium metal layer 10; and a protective layer 20 formed on at least one surface of the lithium metal layer, and the protective layer is manufactured using a composition for a protective layer for a lithium metal anode according to any one of the above-described embodiments.

The lithium metal anode 100 includes a protective layer 20 that may effectively suppress the growth of lithium dendrites by inducing uniform lithium deposition behavior on at least one surface of the lithium metal layer 10, and the protective layer 20 is manufactured using a composition for a protective layer for a lithium metal anode according to any one of the above-described embodiments. Accordingly, the protective layer 20 includes an inorganic nitrate including a lithio-philic metal; and an organic polymer including fluorine (F), and may further include a lithium salt. Detailed descriptions of the lithio-philic metal, the inorganic nitrate, the organic polymer, and the lithium salt will be omitted because the descriptions overlap the above-described content.

The lithium metal layer 10 includes a lithium metal or alloys thereof, and may be a metal layer substantially formed only of lithium metal. A thickness of the lithium metal layer 10 is not particularly limited, and may be, for example, 1 to 200 µm.

The protective layer 20 may include at least one material among lithium fluoride (LiF) or lithium nitride (Li3N). The lithium fluoride (LiF) and lithium nitride (Li3N) are inorganic compounds that may be formed by the reaction of fluorine and nitrogen elements in the protective layer 20 with lithium ions during the battery charging/discharging process, and may further improve the uniform electrodeposition characteristics, mechanical strength, and the like, of lithium metal during the battery charging/discharging. Accordingly, when the protective layer 20 includes at least one material among lithium fluoride (LiF) and lithium nitride (Li₃N), the mechanical strength, lifespan characteristics, electrochemical performance, ion conductivity performance, and the like, of the lithium metal anode 100 may be further improved.

The lithium metal anode 100 may further include an intermediate layer 30 between the lithium metal layer 10 and the protective layer 20 (see FIG. 1B). The intermediate layer 30 may be formed during the process of manufacturing the lithium metal anode 100 including the lithium metal layer 10 and the protective layer 20, or may be formed during the charge/discharge process of a lithium metal battery including the lithium metal anode 100. The intermediate layer 30 may induce uniform electrodeposition of lithium ions between the lithium metal layer 10 and the protective layer 20 and may improve the mechanical strength, and the like, of the lithium metal anode 100. The intermediate layer 30 may include at least one material among LiF and Li₃N.

A thickness of the protective layer 20 may be 0.1 to 20 µm. Specifically, the thickness of the protective layer 20 may be 15 µm or less or 10 µm or less. Additionally, when the lithium metal anode 100 further includes an intermediate layer 30, a thickness of the intermediate layer 30 may be 0.5 to 1 µm. When the thickness of the protective layer 20 is within the above-described range, both the mechanical strength and electrochemical performance of the lithium metal anode may be excellently improved.

The lithium metal anode 100 may be manufactured by a method for manufacturing an anode described below.

### A method for manufacturing an anode

A method for manufacturing a lithium metal anode 100 according to an embodiment of the present disclosure includes: an operation of manufacturing a composition for a protective layer for a lithium metal anode, including an inorganic nitrate including a lithio-philic metal; and an organic polymer including fluorine (F); and an operation of forming a protective layer 20 on at least one surface of a lithium metal layer 10 using the composition for a protective layer for a lithium metal anode.

Detailed descriptions of the lithio-philic metal, the inorganic nitrate, the organic polymer, the composition, metal layer 10, and the protective layer 20 will be omitted because the descriptions overlap the above-described contents.

Conventional methods for manufacturing a lithium metal anode include atomic layer deposition (ALD) and pulsed laser deposition (PLD), and a separate protective layer has been formed on a lithium metal layer through these deposition methods. However, in the case of these deposition methods, separate equipment has been used, and it may be difficult to reduce process costs and save the time, and thus, there has been difficulty in securing productivity. On the other hand, according to the method for manufacturing a lithium metal anode according to an embodiment, a one-pot reaction may be performed through a solution process using a composition when forming a protective layer on the surface of a lithium metal layer, and the process time and costs may be shortened, so that a lithium metal anode may be manufactured with high productivity.

The composition for a protective layer for a lithium metal anode may further include a lithium salt including fluorine (F), and the composition for a protective layer for a lithium metal anode may further include an organic solvent. Detailed descriptions of the lithium salt and the organic solvent will be omitted because the descriptions overlap the above-described contents.

The operation of manufacturing the composition may include: an operation S1 of adding an organic polymer including fluorine (F) to an organic solvent to manufacture a first solution; and an operation S2 of adding an inorganic nitrate including a lithio-philic metal to the first solution to manufacture a second solution. In this case, each of the operation S1 and the operation S2 may further include an operation of stirring the first solution and the second solution at room temperature for 3 to 48 hours. In this case, the stirring speed (RPM) may be 100 to 400 RPM.

When the composition for a protective layer for lithium metal anode further includes a lithium salt, the operation of manufacturing the composition may include an operation S1' of preparing a first' solution by adding an organic polymer including fluorine (F) to an organic solvent; an operation S2' of preparing a second' solution by adding a lithium salt to the first' solution; and an operation S3 of manufacturing a third' solution by adding an inorganic nitrate including a lithio-philic metal to the second' solution. In this case, each of the operations S1' to S3' may further include an operation of stirring the first' to third' solutions at room temperature for 3 to 24 hours. In this case, the stirring speed (RPM) may be 100 to 400 RPM.

The operation of forming a protective layer 20 on at least one surface of the lithium metal layer 10 by the composition for a protective layer for a lithium metal anode may be advanced by a process of applying the composition for a protective layer for a lithium metal anode on at least one surface of the lithium metal layer and then drying the composition.

The application process may be performed by a method such as doctor blade coating, dip coating, bar coating, casting, or the like, but the present disclosure is not limited thereto.

The drying process may be performed at a temperature of 10 to 50°C, specifically, at room temperature (20 to 25°C).

### Lithium Metal Battery

A lithium metal battery according to an embodiment includes a lithium metal anode 100 according to any one of the above-described embodiments. Specifically, the lithium metal battery may include a lithium metal anode 100, a cathode, and an electrolyte according to any one of the above-described embodiments, and may optionally include or not include a separator.

The cathode is not particularly limited as long as this is commonly used in a secondary battery, and may include a lithium-transition metal oxide as a cathode active material, and may include, for example, a lithium-transition metal oxide such as lithium cobalt oxide (LiCoO₂), lithium manganese oxide (LiMn₂O₄), or lithium nickel oxide (LiNiO₂), or a lithium-transition metal composite oxide in which some of these transition metals are substituted with other transition metals. Specifically, the cathode active material may be an NCM-based cathode active material represented by the following chemical formula 2; or an LLO (Li rich layered oxides, Over Lithiated Oxides, Over-lithiated layered oxide, OLO, LLOs)-based cathode active material represented by the following chemical formula 3.

[Chemical Formula 2] LiₐNi_{b}M_{1-b}O₂

In the chemical formula 2, 0.9≤a≤1.2, b≥0.5, and M is at least one of Na, Mg, Ca, Y, Ti, Hf, V, Nb, Ta, Cr, Mo, W, Mn, Co, Fe, Cu, Ag, Zn, B, Al, Ga, C, Si, Sn, Ba and Zr.

Specifically, in the chemical formula 2, 0.95≤a≤1.08 may be satisfied, and b may be 0.6 or more, 0.8 or more, more than 0.8, 0.9 or more, or 0.98 or more.

Specifically, in the chemical formula 2, M may include Co, Mn, or Al, and more specifically, M may include Co and Mn and optionally further include Al.

[Chemical Formula 3] Li₁₊ₓM₁₋ₓO₂

In the chemical formula 3, 0≤x≤0.4, and M is at least one of Na, Mg, Ca, Y, Ti, Hf, V, Nb, Ta, Cr, Mo, W, Ni, Mn, Co, Fe, Cu, Ag, Zn, B, Al, Ga, C, Si, Sn, Ba, and Zr.

Specifically, in the chemical formula 3, M may include Ni, Co, Mn, or Al, and more specifically, may include Ni, Co, and Mn, and optionally further include Al.

Additionally, the cathode active material may be a lithium iron phosphate (LFP)-based cathode active material represented by the chemical formula of LiFePO₄.

Additionally, the lithium-transition metal oxide may be a secondary particle formed into a substantially single particle by assembling or agglomerating a plurality of primary particles, or may be in a single particle form. The single particle form may denote, for example, excluding secondary particles formed into a substantially single particle by assembling or agglomerating a plurality of primary particles (for example, more than 10 primary particles). However, the single particle form does not exclude the fact that single particles in the range of 2 to 10 are attached to or in close contact with each other to have a single body form. In some embodiments, the cathode active material may include both a secondary particle form and a single particle form.

The lithium metal battery may or may not further include a separator, and when the lithium metal battery further includes the separator, the separator is not particularly limited as long as this is applicable to a typical lithium secondary battery. For example, the separator may include a porous substrate, and the porous substrate may be a polyolefin-based porous substrate. The polyolefin-based porous substrate may have a plurality of pores and may be a substrate typically used in electrochemical elements. The porous polyolefin substrate may be selected from the group consisting of, for example, a polyethylene single film, a polypropylene single film, a polyethylene/polypropylene double film, a polypropylene/polyethylene/polypropylene triple film, and a polyethylene/polypropylene/polyethylene triple film, but the present disclosure is not limited thereto.

The lithium metal battery may be accommodated in a separate case together with an electrolyte. In this case, the electrolyte may be a liquid electrolyte including a lithium salt and an organic solvent, and the lithium salt is expressed by the chemical formula of Li⁺X⁻ and may include one type or two or more types of anions (X⁻) such as F⁻, Cl⁻, Br⁻, I⁻, NO₃⁻, N(CN)₂⁻, BF₄⁻, ClO₄⁻, PF₆⁻, and the like, but the present disclosure is not limited thereto. Additionally, the organic solvent may include, for example, one type or two or more types of propylene carbonate (PC), ethylene carbonate (EC), diethyl carbonate (DEC), dimethyl carbonate (DMC), ethylmethyl carbonate (EMC), fluoroethylene carbonate (FEC), and the like, but the present disclosure is not limited thereto.

Meanwhile, the lithium metal battery may be an all-solid-state battery including a lithium metal anode 100 according to any one of the above-described embodiments, a cathode, and a solid electrolyte layer disposed between the anode and the cathode.

The solid electrolyte included in the solid electrolyte layer is not particularly limited and may include at least one of conventional solid electrolytes. For example, the solid electrolyte may be an oxide-based solid electrolyte such as Li₇La₃Zr₂O₁₂(LLZO) and the like; a sulfide-based solid electrolyte such as Thio-LISICON, β-Li₃PS₄, Li₇P₃S₁₁, Li₂S-P₂S₅, LGPS, an argyrodite-based compound, and the like; or a polymer-based solid electrolyte such as (1) a solid polymer electrolyte formed by adding a polymer resin such as a polyether-based polymer to a lithium salt, and (2) a polymer gel electrolyte in which an organic electrolyte including an organic solvent and a lithium salt is impregnated into a polymer resin.

The argyrodite-based compound may be represented by the following chemical formula 4.

[Chemical Formula 4] Liₐ⁺A⁺_{b}Q_{c}X⁻_{d}

In the chemical formula 4, 1≤a≤12, 0≤b≤5, 0≤c≤10, and 0≤d≤2 are satisfied, A represents at least one of P, As, Ge, Ga, Sb, Si, Sn, Al, In, Ti, V, Nb, or Ta, Q represents at least one of S, Se, or Te, and X represents at least one of Cl, Br, I, F, CN, OCN, SCN, or N₃.

Specifically, the argyrodite compound may be a compound represented by the chemical formula of Li₇₋ₓPS₆₋ₓClₓ (0≤x≤2), Li₇-ₓPS₆₋ₓBrₓ (0≤x≤2), or Li₇₋ₓPS₆₋ₓIₓ (0≤x≤2).

More specifically, the argyrodite compound may be a compound represented by chemical formulas such as Li₆PS₅Cl, Li₆PS₅Br, Li₆PS₅I, Li_{6.5}Sb_{0.5}Ge₀.₅S₅I, Li_{5.7}PS_{4.7}Cl_{1.3}, and Li_{6.6}Sb_{0.5}Si_{0.6}S₅I.

When the lithium metal battery includes the lithium metal anode 100 described above, the growth of lithium dendrites may be effectively suppressed by the protective layer 20 capable of inducing uniform lithium electrodeposition behavior, so that the lifespan characteristics, electrochemical performance, and safety may all be excellent.

### Mode for Invention

### Example

### 1. Composition for an anode protective layer

### 1) Manufacturing of composition

### (1) Inventive Example 1 and Comparative Example 1

Polyvinylidene difluoride-hexafluoropropylene copolymer (PVDF-co-HFP) as an organic polymer was added to tetrahydrofuran (THF), an organic solvent, in an amount of 10 wt% based on the total weight of the solution, and was stirred at room temperature for 12 to 24 hours to manufacture a solution in which the organic polymer was dispersed. Then, silver nitrate (AgNO₃) was additionally added as an inorganic nitrate to the solution in which the organic polymer was dispersed, and the mixture thereof was stirred at room temperature for 24 hours to manufacture a composition for an anode protective layer of Inventive Example 1. In this case, the inorganic nitrate was added to the solution so that the content in the composition was equal to that of the organic polymer (i.e., weight ratio = 1:1), and thus, the composition therefor was manufactured so that the contents of the organic polymer and the inorganic nitrate in the composition of the finally manufactured Inventive Example 1 were respectively the same as 9.09 wt%.

Meanwhile, in the case of Comparative Example 1 to which the anode protective layer was not applied, a separate composition for a protective layer for an anode was not manufactured.

### (2) Inventive Examples 2 to 3 and Comparative Examples 2 to 3

Inventive Examples 2 to 3 and Comparative Examples 2 to 3 were manufactured in the same manner as that of Inventive Example 1, but 0.05 g, 0.2 g, and 0.01 g of inorganic nitrate were added so that the content of the inorganic nitrate in the finally manufactured composition was as shown in Table 1 below, and thus, compositions for a protective layer for an anode of Inventive Examples 2 to 3 and Comparative Example 2 were manufactured, respectively. Additionally, except that inorganic nitrate was not added (i.e., the amount added was 0 g), a composition for an anode protective layer of Comparative Example 3 was manufactured in the same manner as in Inventive Example 1.

### (3) Inventive Example 4

Polyvinylidene difluoride-hexafluoropropylene copolymer (PVDF-co-HFP) as an organic polymer was added to tetrahydrofuran (THF), an organic solvent, in an amount of 10 wt% based on the total weight of the solution, and was stirred at room temperature for 12 to 24 hours to manufacture a solution in which the organic polymer was dispersed. Lithium bis(fluorosulfonyl)imide salt (LiFSI) as a lithium salt was additionally added to the solution, and was stirred at room temperature for 3 to 24 hours. In this case, the lithium salt was added to the solution so that the content in the composition was equal to that of the organic polymer (i.e., weight ratio = 1:1).

Then, silver nitrate (AgNO₃) was further added as an inorganic nitrate to the solution in which the organic polymer and lithium salt were dispersed, and stirred at room temperature for 24 hours to manufacture a composition for a protective layer for an anode of Inventive Example 1. In this case, the inorganic nitrate was added to the solution so that the content in the composition was equal to that of the organic polymer and the lithium salt (i.e., weight ratio = 1:1:1), and thus, the composition therefor was manufactured so that the contents of the organic polymer and the inorganic nitrate in the finally manufactured composition of Inventive Example 2 were respectively the same as 8.33 wt%.

### (4) Inventive Examples 5 to 7

The compositions for a protective layer of an anode of Inventive Examples 5 to 7 were manufactured in the same manner as that of Inventive Example 4, but the content of the lithium salt in the finally manufactured composition was as shown in Table 1 below, so that 0.05 g, 0.01 g, and 0.2 g of the lithium salt were added, respectively.

### (5) Inventive Example 8

The composition for a protective layer of an anode of Inventive Example 8 was manufactured in the same manner as that of Inventive Example 1, but inorganic nitrate was added so that a weight ratio of the organic polymer and the inorganic nitrate in the finally manufactured composition was 3:7 instead of 1:1 (i.e., the content of the organic polymer in the composition was 6 wt%, and the content of the inorganic nitrate was 14 wt%), and the composition for a protective layer for an anode of Inventive Example 8 was manufactured, respectively.

### 2) Evaluation of the composition (viscosity characteristics)

For the composition for a protective layer for an anode manufactured as described above, the viscosity was measured by selecting Spindle 31 with a Brookfield DV-E viscometer from AMETEK, and the results thereof are shown in Table 1 below. During the viscosity analysis, a torque was analyzed under the conditions of 10% or more and RPM from 10 to 100, and samples were prepared at the same room temperature as the equipment installation environment to minimize changes due to temperature.

### 2. Lithium Metal Anode and Battery

### 1) Manufacturing of anode and battery

The composition for a protective layer for an anode manufactured as described above was coated on a surface of a lithium metal layer (thickness: 100 µm) at a thickness of 10 µm by a dip coating method, and then dried at room temperature for 30 minutes or more to manufacture lithium metal anodes having a protective layer formed on the lithium metal layer, according to inventive examples and comparative examples.

A 2032 coin-type lithium metal symmetrical battery was manufactured using an anode manufactured described above; a polyolefin-based separator coated on a ceramic-based inorganic material; and a 1.0M LiPF₆⁻ EC/EMC (3/7, vol%) + 2 wt% FEC electrolyte, according to examples and comparative examples. In this case, the protective layer was only coated on the lithium electrode corresponding to a working electrode, and in the case of Comparative Example 4, an anode and a battery were manufactured without coating a separate protective layer.

### 2) Battery Evaluation (Lifespan Characteristics)

### (1) Overvoltage Evaluation

The overvoltage evaluation according to the number of cycles was performed at room temperature for the 2032 coin-type lithium metal symmetrical battery manufactured as described above. The evaluation conditions were applied as a current density of 1 mA/cm² and an electrodeposition amount of 2 mAh/cm², and the lifespan characteristics according to the number of cycles of the battery were evaluated by measuring the degree of overvoltage that occurs during the oxidation/reduction reaction of lithium at a limited capacity and current density for the battery over time.

Specifically, the time and number of cycles at a time point at which the overvoltage (1) increases to a value approaching 0.1 V or (2) decreases to a value approaching 0 V were measured, and the corresponding time point was determined to be the end of the lifespan of the battery. The number of cycles until the end of the lifespan of each battery was measured, and results thereof are shown in Table 1 below.

### (2) Capacity Retention Rate Evaluation

For a full cell including a lithium metal anode (thickness: 20 µm) manufactured in the same manner as described above and a cathode to which an NCM-based active material was applied, a cycle of charging at 0.5 C for 2 hours in the range of SOC 0 to 100% at room temperature and discharging at 0.5 C was repeated, and the capacity retention rate (discharge capacity retention rate as compared to initial discharge capacity) according to the number of cycles was measured in %, and the results are shown in FIG. 4.

**Table 1:**

| **Division** | **PcH Content** | **AgNO3 Content** | **PcH: AgNO₃** | **LiFSI Content** | **Composition Viscosity** | **Cycle Number** |
|---|---|---|---|---|---|---|
| | | | | | | **(times)** |
| **Inventive Example 1** | 9.09 wt% | 9.09 wt% | 1 : 1 | - | 166.2 cP | 755 |
| **Inventive Example 2** | 9.52 wt% | 4.76 wt% | 2 : 1 | - | 151.4 cP | 362 |
| **Inventive Example 3** | 8.33 wt% | 16.6 wt% | 1 : 2 | - | 205.0 cP | 389 |
| **Inventive Example 4** | 8.33 wt% | 8.33 wt% | 1 : 1 | 8.33 wt% | 181.2 cP | 300 |
| **Inventive Example 5** | 8.69 wt% | 8.69 wt% | 1 : 1 | 4.34 wt% | 170.9 cP | 362 |
| **Inventive Example 6** | 9.01 wt% | 9.01 wt% | 1 : 1 | 0.90 wt% | 167.8 cP | 437 |
| **Inventive Example 7** | 7.69 wt% | 7.69 wt% | 1 : 1 | 15.4 wt% | 186.0 cP | 270 |
| **Comparative Example 1** | - | - | - | - | - | 90 |
| **Comparative Example 2** | 9.90 wt% | 0.99 wt% | 10 : 1 | - | 94.8 cP | 172 |
| **Comparative Example 3** | 10 wt% | - | - | - | 92.1 cP | 157 |

Referring to Table 1 and FIGS. 2 to 3, it may be confirmed that the batteries of Inventive Examples 1 to 7 have a later end-of-life point (i.e., the number of cycles and time at a time point at which the overvoltage rapidly rises to 0.1 V or rapidly drops to 0 V) than Comparative Example 1 in which the protective layer is not formed. Additionally, it may be confirmed that the batteries of Inventive Examples 1 to 7 have a later end-of-life point than the batteries of Comparative Examples 2 and 3 in which the content of AgNO₃ is significantly low or is not included. Accordingly, it may be confirmed that the batteries of Inventive Examples 1 to 7 having a protective layer manufactured with a composition for a protective layer for a lithium metal anode in which an inorganic nitrate including a lithio-philic metal on a lithium metal layer and an organic polymer including fluorine (F) are included in an amount of 4 to 17 wt% in the composition for a protective layer for a lithium metal anode has superior lifespan characteristics as compared to the batteries of Comparative Examples 1 to 3.

Furthermore, when the weight ratios of the inorganic nitrate and the organic polymer are equal to each other, it may be confirmed that the battery of Inventive Example 1 that does not include LiFSI has a later end-of-life point than the batteries of Inventive Examples 4 to 7 that include LiFSI as a lithium salt, and thus has better lifespan characteristics.

Meanwhile, referring to FIG. 4, Inventive Examples 1 and 8 having the protective layer formed with the composition including the inorganic nitrate and the organic polymer were shown to have an excellent capacity retention rate as compared to Comparative Example 1. Additionally, in the case of inventive Example 8 (3:7) in which the content of the inorganic nitrate relative to the organic polymer was applied relatively higher than that of Inventive Example 1 (5:5), it was seen that the capacity retention rate was 96% even when the number of cycles was 73, and thus, the capacity retention rate was significantly excellent.

In consideration of the results described above, when forming the protective layer on the lithium metal layer by the composition in which the content of the inorganic nitrate including the lithio-philic metal and the organic polymer including fluorine (F) are appropriately adjusted as in Inventive Examples 1 to 8, the lithio-philic metal may lower a lithium nucleation barrier and may induce uniform lithium deposition, and a film (N-Rich and F-Rich SEI) including a large amount of nitrogen (N) and fluorine (F) may be formed by the inorganic nitrate and the organic polymer, so that the ion conductivity, strength, and electrochemical stability of the protective layer may all be excellent. Therefore, it is determined that the lifespan characteristics, electrochemical performance, and the like, of the lithium metal anode including such a protective layer and the battery may be improved to an excellent level.

Although embodiments of the present disclosure have been described above, the scope of the present disclosure is not limited thereto, and it will be apparent to those skilled in the art that modifications and variations could be made without departing from the scope of the technical concept of the present disclosure as defined by the appended claims.

### [Description of Reference Characters]

10: Lithium Metal Layer
20: Protective Layer
30: Intermediate Layer
100: Lithium Metal Anode

### Industrial applicability

As described above, the features of the present disclosure may be applied to a composition for a protective layer for a lithium metal anode, a lithium metal anode, and a lithium metal battery in whole or in part.

## Claims

1. A composition for a protective layer for a lithium metal anode, comprising: an inorganic nitrate including a lithio-philic metal; and an organic polymer including fluorine (F),
wherein an inorganic nitrate content of the composition for a protective layer for a lithium metal anode is 4 to 17 wt%, and
an organic polymer content of the composition for a protective layer for a lithium metal anode is 4 to 17 wt%.

2. The composition for a protective layer for a lithium metal anode of claim 1, wherein a weight ratio of an inorganic nitrate and an organic polymer in the composition for a protective layer for a lithium metal anode is 1:9 to 9:1.

3. The composition for a protective layer for a lithium metal anode of claim 2, wherein a weight ratio of an inorganic nitrate and an organic polymer in the composition for a protective layer for a lithium metal anode is 2:8 to 4:6.

4. The composition for a protective layer for a lithium metal anode of claim 1, wherein the composition for a protective layer for a lithium metal anode further includes a lithium salt including fluorine (F),
a content of the lithium salt in the composition for a protective layer for a lithium metal anode is 10 wt% or less.

5. The composition for a protective layer for a lithium metal anode of claim 4, wherein a content of the lithium salt in the composition for a protective layer for a lithium metal anode is 1 wt% or less.

6. The composition for a protective layer for a lithium metal anode of claim 4, wherein the lithium salt is represented by the following chemical formula 1, 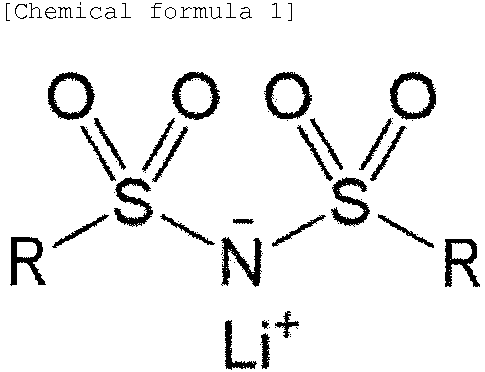 In the chemical formula **1,** R represents each independently fluorine (F); an alkyl group having 1 to 20 carbon atoms substituted with at least one fluorine (F); or an aryl group having 6 to 30 carbon atoms substituted with at least one fluorine (F).

7. The composition for a protective layer for a lithium metal anode of claim 1, wherein the lithio-philic metal is Au, Ag, Pt, Al, Mg, Zn, Ni, Te, Bi, Pb, Ga, Cd, Hg, Pd, Sc, Y, Ca, Sr, Ba, Ni, Sn, Cu, Ge, or combinations thereof.

8. The composition for a protective layer for a lithium metal anode of claim 1, wherein the lithio-philic metal is Ag.

9. The composition for a protective layer for a lithium metal anode of claim 1, wherein the organic polymer is an aliphatic organic polymer including fluorine (F).

10. The composition for a protective layer for a lithium metal anode of claim 9, wherein the organic polymer includes at least one selected from polyvinylidene difluoride (PVDF) and polyvinylidene difluoride-hexafluoropropylene copolymer (PVDF-co-HFP).

11. The composition for a protective layer for a lithium metal anode of claim 4, wherein the inorganic nitrate includes Ag,
the organic polymer is an aliphatic organic polymer including fluorine,
the lithium salt is represented by the following chemical formula 1, and
a weight ratio of the inorganic nitrate and the organic polymer in the composition for a protective layer for a lithium metal anode is 2:8 to 4:6, 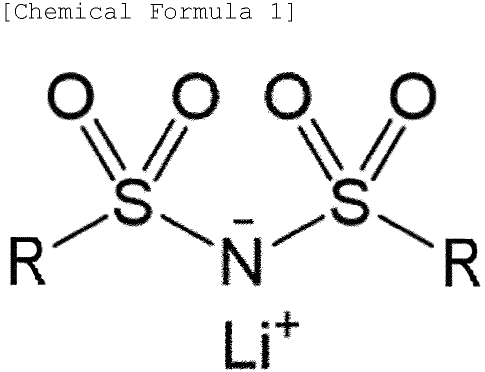 In the chemical formula 1, R represents each independently fluorine (F); an alkyl group having 1 to 20 carbon atoms, at least one of which is substituted with fluorine (F); or an aryl group having 6 to 30 carbon atoms, at least one of which is substituted with fluorine (F).

12. The composition for a protective layer for a lithium metal anode of claim 1, wherein a viscosity of the composition for a protective layer for a lithium metal anode is 100 to 400 cP.

13. A lithium metal anode, comprising: a lithium metal layer; and a protective layer formed on at least one surface of the lithium metal layer,
wherein the protective layer is manufactured using a composition for a protective layer for a lithium metal anode according to one of claims 1 to 12.

14. The lithium metal anode of claim 13, further comprising:
an intermediate layer between the lithium metal layer and the protective layer.

15. A lithium metal battery comprising a lithium metal anode according to claim 13.
